# EUROPÄISCHE PATENTANMELDUNG

(11) **EP 0 669 731 A1**
(43) Veröffentlichungstag der Anmeldung: **30.08.1995**
(21) Anmeldenummer: 95102291.2
(22) Anmeldetag: 17.02.1995
(51) Int. Cl.: H04B 10/18

(54) **Optische Übertragungsverfahren mit PM/AM-Konversion**

(30) Priorität: 25.02.1994 DE 4406273
(71) Anmelder: SIEMENS AKTIENGESELLSCHAFT, 80333 München (DE)
(72) Erfinder: Das, Chandan, Dr., Dipl.-Ing., D-82061 Neuried (DE); Gottwald, Erich, Dr.rer.nat., D-83607 Holzkirchen (DE)

(57) **Zusammenfassung**

Optische Übertragungssysteme mit Datenraten im Gbit/s-Bereich sollen im Hinblick auf möglichst geringen Aufwand eine große Streckenlänge ohne Impulsregenerierung und Zwischenverstärkung aufweisen. Dabei kann sich die chromatische Dispersion der verwendeten Glasfaser begrenzend auf die Übertragungsreichweite auswirken. Erfindungsgemäß wird vorgeschlagen, zur optischen Signalübertragung sendeseitig phasenmoduliertes optisches Licht auszusenden, daß entlang der Glasfaserübertragungsstrecke durch deren chromatische Dispersion eine Amplitudenmodulation erfährt und empfangsseitig das Übertragungssignal hinsichtlich seiner Amplitudenmodulation zu detektieren.

## Beschreibung

Die Erfindung betrifft ein Verfahren entsprechend dem Oberbegriff des Patentanspruchs 1.

In der optischen Übertragungstechnik ist der Bedarf an Übertragungskapazität stetig gestiegen. Um die gewünschten Übertragungskapazitäten bereitstellen zu können, werden Systeme mit Datenraten bis in den Gbit/s Bereich entwickelt, die außerdem eine möglichst große Streckenlänge ohne Impulsregenerierung aufweisen sollen. Dabei kann sich die Gruppengeschwindigkeits-Dispersion der verwendeten Glasfaser als Übertragungsmedium begrenzend auf die Übertragungsreichweite auswirken. Eine Möglichkeit zur Erhöhung der dispersionsbegrenzten Reichweite ist der Einsatz spezieller Glasfasern mit niedrigen Werten ihrer Dispersionsparameter im für die Übertragung verwendeten Wellenlängenbereich, beispielsweise können für die Übertragung bei Wellenlängen um 1,5 um sogenannte dispersionsverschobene Glasfasern verwendet werden. Alternativ können auch Dispersionskompensatoren in den Lichtweg eingefügt werden.

Ein Verfahren der eingangs genannten Art ist aus "Electronics Letters" vom 18. Februar 1993; Vol. 29, No. 4, Seiten 402 bis 404, "Unregenerated Optical Transmission at 10 Gbit/s via 204 km of Standard Singlemode Fibre Using a Directly Modulated Laser Diode" von B. Wedding und B. Franz bekannt. In dieser Veröffentlichung wird eine Möglichkeit vorgestellt, die gegenüber konventioneller Übertragung mit Intensitätsmodulation und Direktdetektion über eine dispersionsbedingte Frequenzmodulations- Amplitudenmodulations(AM/FM)-Konversion größere Streckenlängen überbrückbar macht. Beim bekannten Verfahren wird ein frequenzmodulierter optischer Sender eingesetzt, bei der anschließenden Übertragung mittels einer Standard-Single-Mode-Faser (SSMF) erfolgt eine FM/AM-Konversion, die empfangsseitig mit einem Direktdetektionsempfänger mit nachgeschaltetem elektrischen Filter in Form eines Tiefpasses oder Integrators demoduliert wird. Mit dem bekannten Verfahren konnte bei einer Wellenlänge von 1,5αrn eine Entfernung von 151 km zwischenverstärkerfrei überbrückt werden. Dabei war jedoch sendeseitig ein Frequenzhub von 6,5 GHz erforderlich, der über die direkte Modulation eines FSK-Lasers erzielt wurde. Bei diesem bekannten Stand der Technik ergeben sich Probleme insbesondere dadurch, daß bei den für die Übertragung vorgesehenen Datenraten im Gbit/s-Bereich ein sehr großer Frequenzhub des FSK-Senders erforderlich ist, der an der Grenze dessen liegt, was zur Zeit mit FSK-Lasersendern erreichbar ist.

Die Aufgabe bei der vorliegenden Erfindung besteht also darin, eine einfache Möglichkeit zur Reichweitenerhöhung bei dispersionsbegrenzter Übertragung zu finden, die die durch für FSK-Lasersender derzeit bestehenden Grenzen bei der Datenrate der Übertragungssignale überschreitet.

Erfindungsgemäß wird die Aufgabe durch ein Verfahren der eingangs genannten Art gelöst, daß durch die im Kennzeichen des Patentanspruchs 1 angegebenen Merkmale weitergebildet ist.

Von besonderem Vorteil bei der erfindungsgemäßen Lösung ist die für die Ansteuerung des sendeseitigen Phasenmodulators benötigte geringe Ansteuerleistung, außerdem liegt die Grenzfrequenz handelsüblicher geeigneter Phasenmodulatoren um ein Mehrfaches über der von FSK-Lasern mit ausreichender Frequenzmodulierbarkeit.

Zweckmäßige Ausbildungen des erfindungsgemäßen Verfahrens sind in den Patentansprüchen 2 bis 4 beschrieben. Die Erfindung soll im folgenden anhand eines in der Zeichnung dargestellten Ausführungsbeispiels näher erläutert werden. Dabei zeigt:
Figur 1 den Verlauf der Phasenmodulator-Ansteuerspannung bei Ansteuerung mit einer NRZ-Datenfolge,
Figur 2 das elektrische Empfangssignal nach einer Übertragungsstrecke von 150 km und
Figur 3 das demodulierte binäre Datensignal am Ausgang Entscheiders im Empfänger.

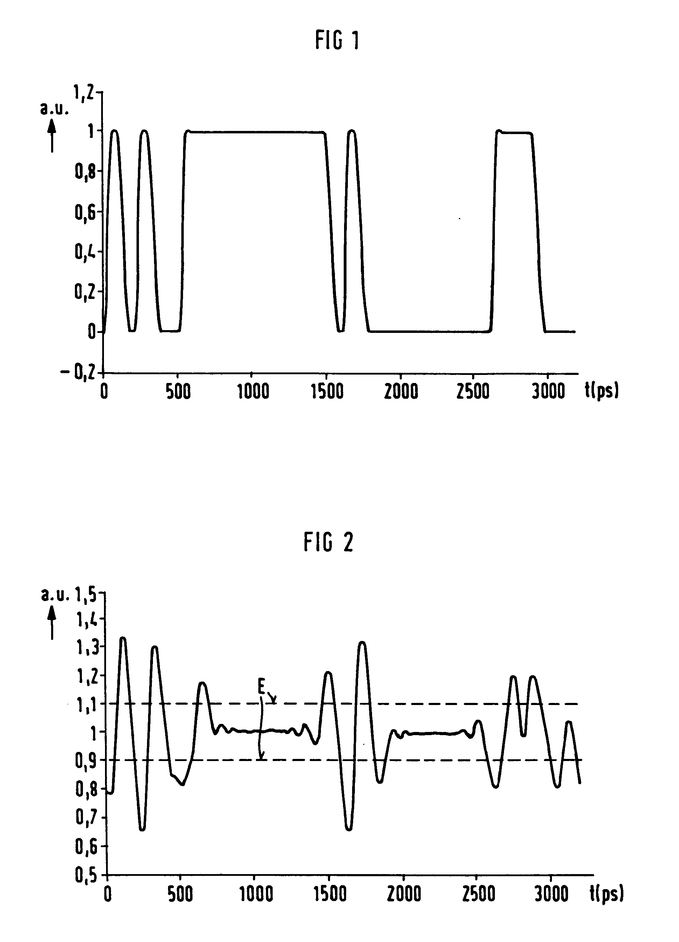

Der in der Figur 1 dargestellte Verlauf der Phasenmodulator-Ansteuerspannung ergab sich bei einem Datensignal im NRZ-Format und mit einer Bitrate von 10 Gbit/s, die Darstellung erfolgt über eine Zeit von 3200 ps. Der sendeseitig optisch erzeugte Phasenhub beträgt dabei nur etwa 0,2 _{1T}rad, so daß nur eine geringe Ansteuerleistung für den Phasenmodulator benötigt wird.

In der Figur 2 ist das sich bei einem Signalverlauf entsprechend Figur 1 empfangsseitig ergebende elektrische Empfangssignal vor dem Entscheider nach Übertragung über eine Strecke von 150 km über eine Standard-Single-Mode-Faser (SSMF) dargestellt. Die Faserstrecke hatte dabei eine Dispersion von 17 ps/(nm km). In der Figur 2 sind bei einer relativen Amplitude von 0,9 und 1,1 die empfangsseitig eingestellten Entscheiderschwellen E markiert. Bemerkenswert am Signalverlauf nach der Figur 2 ist dabei, daß trotz der langen Übertragungsstrecke empfangsseitig eine einwandfreie Detektion möglich ist. Ein demgegenüber mittels Intensitätsmodulation und Direktdetektion übertragenes Signal wäre auf Grund der Verzerrungen durch die Gruppengeschwindigkeits-Dispersion nicht mehr auswertbar.

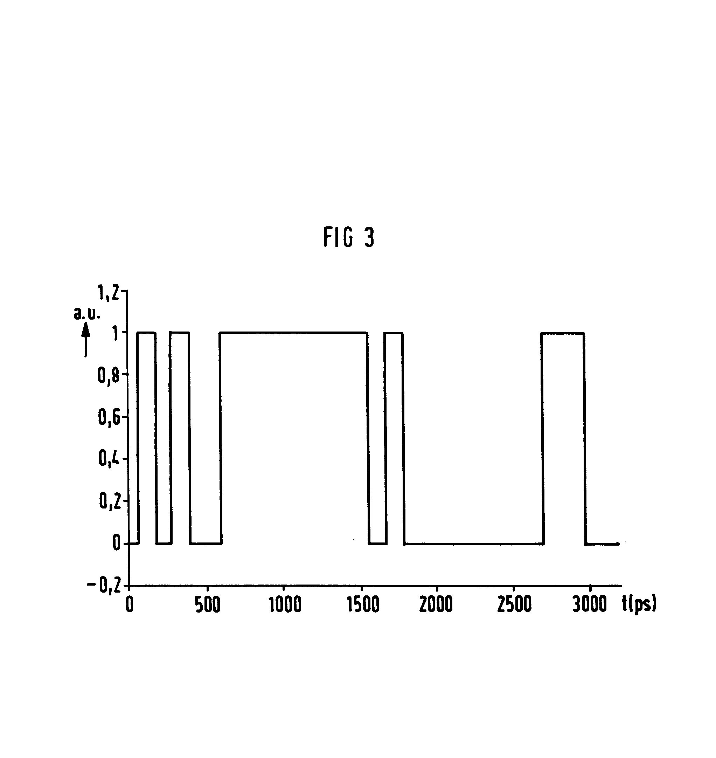

Das in der Figur 3 dargestellte Impulsdiagramm zeigt das demodulierte binäre Datensignal am Ausgang des Entscheiders, der einen mit Hysterese behafteten Eingang aufweist. Der Vergleich der Impulsdiagramme der Figuren 1 und 3 zeigt die korrekte Übertragung eines digitalen Signals mit einer Datenrate von 10 Gbit/s über eine Faserstrecke von 150 km, die Verläufe zeigen, daß noch beträchtliche Systemreserven vorhanden sind.

## Patentansprüche

1. Verfahren zur optischen Signalübertragung mit durch die Gruppengeschwindigkeits-Dispersion der zur Übertragung verwendeten Glasfaser begrenzten Reichweite,
dadurch gekennzeichnet,
daß sendeseitig mit der zu übertragenden Information ein phasenmoduliertes optisches Signal erzeugt wird, das an eine Glasfaser-Übertragungsstrecke abgegeben wird und das entlang dieser Übertragungsstrecke durch deren Gruppengeschwindigkeits-Dispersion eine Amplitudenmodulation erfährt und daß empfangsseitig das Übertragungssignal hinsichtlich seiner Amplitudenmodulation detektiert wird.

2. Verfahren nach Anspruch 1,
dadurch gekennzeichnet,
daß empfangsseitig eine Direktdetektion des amplitudenmodulierten Empfangssignals vorgesehen ist.

3. Verfahren nach Anspruch 1,
dadurch gekennzeichnet,
daß sendeseitig das Übertragungssignal durch Phasenmodulation mit einem Phasenhub von wenigen Zehntel Trad erzeugt wird.

4. Verfahren nach Anspruch 1,
dadurch gekennzeichnet,
daß als Glasfaser eine Standard-Single-Mode-Faser (SSMF) verwendet wird.
